Europäisches Patentamt

European Patent Office

Office européen des brevets

(19)

(11) Veröffentlichungsnummer: **0 167 742**
**B1**

(12) **EUROPÄISCHE PATENTSCHRIFT**

(45) Veröffentlichungstag der Patentschrift: **14.11.90**

(51) Int. Cl.⁵: **H 01 M 2/04, H 01 M 6/08**

(21) Anmeldenummer: **85105476.7**

(22) Anmeldetag: **06.05.85**

(54) **Galvanisches Primärelement.**

(30) Priorität: **09.07.84 DE 3425170**

(43) Veröffentlichungstag der Anmeldung:
**15.01.86 Patentblatt 86/03**

(45) Bekanntmachung des Hinweises auf die
Patenterteilung:
**14.11.90 Patentblatt 90/46**

(84) Benannte Vertragsstaaten:
**BE CH DE FR GB IT LI NL**

(56) Entgegenhaltungen:
**DE-A-2 345 021**
**FR-A-1 379 397**
**US-A-2 766 316**
**US-A-4 020 241**
**US-A-4 052 533**

(73) Patentinhaber: **VARTA Batterie
Aktiengesellschaft
Am Leineufer 51
D-3000 Hannover 21 (DE)**

(72) Erfinder: **Jung, Gerd
Enzstrasse 1
D-7090 Ellwangen (DE)**

(74) Vertreter: **Kaiser, Dieter Ralf, Dipl.-Ing.
Gundelhardtstrasse 72
D-6233 Kelkheim/Ts. (DE)**

Courier Press, Leamington Spa, England.

EP 0 167 742 B1

## Beschreibung

Die Erfindung betrifft ein galvanisches Primärelement mit einem zylindrischen Metallbehälter als negative Elektrode, einer konzentrisch um einen Kohlestift als Ableiter angeordneten positiven Depolarisatorelektrode, einer Separation und einem Elektrolyten, wobei in einem Abstand oberhalb der Depolarisatorelektrode eine zentral gelochte Dichtungsscheibe aus einem weichelastischen, porigen Material angeordnet ist, welche den Zwischenraum zwischen dem Kohlestift und dem Metallbehälter überbrückt und durch deren zentrales Loch sich der Kohlestift abgedichtet hindurchstreckt.

Galvanische Primärelemente sind in zahlreichen Abwandlungen bekannt; bei dem vorherrschenden Rundzellentyp bildet die negative Elektrode in Form eines Metallbechers aus Zink zugleich das Zellengehäuse. Dieses ist bei der klassischen Zellausführung noch in einer Papphülse verpackt oder überhaupt nur mit einem Etikett versehen, während bei den auslaufsicheren Zellen (leak proof) der samt Inhalt fertig montierte Becher unter Zwischenschaltung einer isolierenden Hülse in einen Blechmantel geschoben wird.

Im Bereich des Gehäusedeckels sind viele konstruktive Maßnahmen besonders darauf gerichtet, eine Austrocknung der Elemente während der Lagerung zu verhindern. Zu Dichtungszwecken werden häufig wachs- oder bitumenartige Substanzen eingesetzt. Bei einem aus der DE-PS 1 114 868 bekannten Trockenelement wird die Effizienz einer die Depolarisatorpuppe abdeckenden plastischen Dichtungsmasse aus Bitumen noch durch eine zwischen dieser und dem Zellendeckel angeordneten undurchlässigen Scheibe aus mit Wachs imprägniertem Karton unterstützt.

Diese und andere bekannte Vorkehrungen haben den Nachteil, daß sie entweder einen erheblichen apparativen und peripheren Aufwand (beheizte Behälter und Leitungen, Dosierpumpen, Abkühlstrecken) oder hohe Gleichmäßigkeit bei vorgefertigten Einlegeteilen erfordern. Außerdem nehmen diese Bestandteile je nach Konstruktion oft ein erhebliches Volumen ein, so daß die Raumausnutzung zu Lasten der eigentlich aktiven Zellbestandteile geht.

Schließlich verändern sich derartige Dichtungssysteme während längerer Lagerzeit, so daß eine Beeinträchtigung der Lagereigenschaften und damit der Gebrauchsfähigkeit eintritt, die nur durch sehr aufwendige zusätzliche Maßnahmen verhindert werden können.

Beim Primärelement gemäß der DE-AS 26 19 178 wird ein vor Austrocknung direkt nach dem Zusammenbau schützender dichter Verschluß dadurch herbeigeführt, daß ein gummielastisches Dichtungselement in die Gehäuseöffnung so weit eingeschoben wird, bis es auf dem nach innen umgebördelten Rand des Zinkbechers aufsitzt und mittels einer Hinterschneidung an der nach unten weisenden Kante des Becherrandes einschnappt. Die endgültige Abdichtung erfolgt dann durch den Formschluß zwischen umgelegtem Becherrand und der entsprechend geformten Dichtungsunterseite.

Aus der DE-AS 27 12 915 ist ein Primärelement der eingangs genannten Art zu entnehmen, bei dem eine Dichtung aus natürlichem, regeneriertem, vulkanisiertem oder synthetischen Kautschuk mit einer großen Anzahl nicht miteinander verbundenen Poren (Zellelstruktur) verwendet wird. Die bekannte Abdichtung kommt durch das Einspannen des Kautschukmaterials zwischen einem innenliegenden Kunststoffteil, in das eine Pluskappe eingesetzt ist, und einem eingezogenen (gesickten) Zinkbecher zustande. In einer alternativen Ausführung ist die bekannte Dichtung zwischen dem umgelegten Rand des Zinkbechers und einem Deckelelement eingeklemmt. Aufgabe der Erfindung ist es, die Lagerfähigkeit von Zellen zu verbessern und eine Dichtung anzugeben, die aus wenigen Teilen besteht, die einen rationellen Zusammenbau in wenigen Arbeitsschritten ermöglicht, die nur wenig Raum innerhalb der Zelle benötigt und die in gebräuchlichen Rundzellen sowohl mit nur etikettiertem Metallbehälter als auch in leak-proof Ausführungen gleichermaßen eingesetzt werden kann.

Die Aufgabe wird erfindungsgemäß mit Hilfe der im kennzeichnenden Teil des Anspruchs 1 genannten Maßnahmen gelöst.

Die für die erfindungsgemäße Dichtungsscheibe verwendbaren Schaumkunststoffe zählen zu der Gruppe der sogenannten weichelastischen Schaumstoffe mit geschlossenzelliger Struktur. Die Basismaterialien sind u.a. Polyethylen, Polystyrol, Polyäther, Polyester oder Polyurethan, vorzugsweise jedoch Polyvinylchlorid. Über die einstellbare Dicke und Porosität der Scheibe kann neben einer gewünschten Elastizität auch eine definierte Permeabilität realisiert werden. Die Materialstärke der Scheibe sollte zwischen 0,5 und 3 mm betragen. Da die geschäumten Kunststoffe in Scheibenform oder in Bandform handelsüblich sind, müssen die erfindungsgemäßen Dichtungsscheiben nur noch direkt an den Fertigungslinien gelocht bzw. aus einem Band ausgestanzt werden, ehe man sie unmittelbar auf dem Rand des Zinkbechers positioniert.

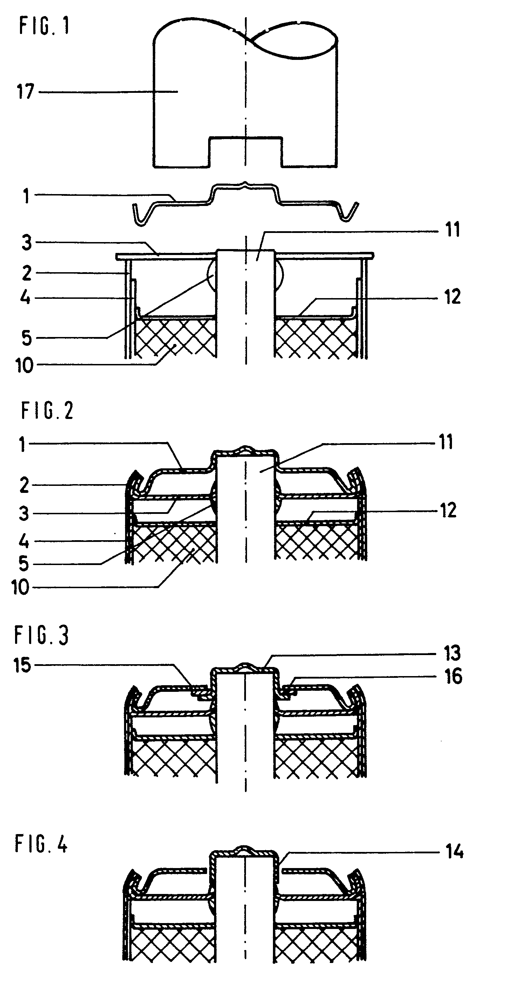

Zu ihrer endgültigen Positionierung, vorzugsweise in den einfachen Zellausführungen, bei denen der Zinkbecher ohne Verkleidung bleibt und lediglich mit einer Etikettierung versehen wird, schiebt man die elastische Scheibe beim anschließenden Aufdrücken der Plus- oder Abdeckkappe mittels eines Stempels zwischen Kappenrand und Zinkbecher (vgl. hierzu die Figur 1). Hierbei kommen gerade spezifische Eigenschaften der Schaumkunststoffe besonders vorteilhaft zur Geltung, welche sie gewöhnlichen Kunststoffen gegenüber als überlegen erscheinen lassen. Es sind dies vor allem eine leichte Kompressibilität, die es gestattet, auch dickere und damit maschinell besser handhabbare Dichtungsscheiben ohne Kanten-oder Rißbildung zu verformen, sowie eine permanente Restelastizität, die sich darin äußert, daß das Material selbst anhaltendem Druck nicht durch Kaltfließen ausweicht. Zur Erhöhung der Abdichtungssicherheit wird der Zinkbecher — je nach Kappenform — leicht nach innen eingezogen und die Dichtungsscheibe auf diese Weise zwischen Kappenrand und Zinkbecherrand eingeklemmt.

Die fertige Zelle enthält außer der erfindungsgemäßen Dichtungsscheibe und einer auf der positiven Elektrodenpuppe aufliegenden Abdeckscheibe, die von Wachs oder Bitumen frei ist, kein weiteres scheibenförmiges Dichtungselement. Lediglich um zu verhindern, daß entlang der Kohlestiftoberfläche durch die Öffnung der Lochscheibe Elektrolyt zur Kappe gelangt, wird erfindungsgemäß auf den Kohlestift im Durchführungsbereich durch die Scheibe eine gegen diese abdichtende klebrige Umrandung aus einer plastischen Dichtmasse aufgebracht. Geeignete Materialien sind z.B. Wachs, Bitumen oder in organischen Lösungsmitteln lösliche Stoffe wie Polyisobutylen, die nach dem Abdunsten des Lösungsmittels einen Rückstand von kautschukelastischer Konsistenz bilden.

Aus den Figuren 1 bis 4 sind verschiedene Ausführungsbeispiele des Erfindungsgegenstandes ersichtlich.

Figur 1 zeigt die Einbringung der Dichtungsscheibe in eine Zelle.

Figuren 3 und 4 zeigen mögliche Positionierungen der Dichtungsscheibe bei nichtummantelten und bei ummantelten Rundzellen.

Nach dem bereits Gesagten erklären sich die Figurendarstellungen weitgehend von selbst. Die Bezugszeichen haben die folgenden Bedeutungen:

1 Pluskappe
2 Metallbehälter (Zinkbecher)
3 Dichtungsscheibe
4 Separator mit Elektrolytpaste beschichtet
5 klebrige Dichtmasse
10 Depolarisationsmasse
11 Kohlestift
12 Abdeckscheibe
13 Flanschkappe
14 Kohlekappe
15 Abdeckkappe
16 Isolierring
17 Stempel

Figur 2 stellt das Ergebnis des in Figur 1 gezeigten Arbeitsganges dar.

Die Zellen nach Figur 3 und 4 unterscheiden sich von derjenigen nach Figur 2 in der zweiteiligen Zellabdeckung, bei der sich die Pluskappe in Form einer Flanschkappe 13 bzw. einer einfachen Kohlekappe 14 auf die Abdeckung des Kohlestiftes beschränkt. Die restliche Zellabdeckung übernimmt eine gesonderte Abdeckkappe 15, wobei nach Figur 4 auch eine "offene" Abdeckung möglich ist, indem hier eine Brücke zwischen Abdeckkappe und Kohlekappe entsprechend dem Isolierring 16 der Figur 3 fehlt. Gegebenenfalls können die Zellen noch mit einem Blechmantel und /oder einer Schrumpfschlauchumhüllung versehen werden.

Aufgrund der dauerelastischen Eigenschaften der Dichtungsscheibe wird das bei Spritzteilen bekannte Kaltfließen des Kunststoffmaterials umgangen. Außerdem werden Unebenheiten an den abdichtenden Oberflächen durch die hohe Elastizität des erfindungsgemäßen Materials ausgeglichen. Die Dauerelastizität des Materials erlaubt gleichzeitig eine Ventilwirkung. Der besondere Vorteil der vorgeschlagenen Dichtungsart liegt in der sehr einfachen Montage, die den bekannten Aufbringungsverfahren der Lochscheibe aus Pappe vergleichbar ist.

Die Zuführung und das Aufpressen von vorgefertigten Lochscheiben aus dem erfindungsgemäßen Material ist auch mit hoher Geschwindigkeit realisierbar.

Wie eingehende Lagerungsversuche an erfindungsgemäßen Zellen und solchen mit herkömmlicher Bitumenabdichtung gezeigt haben, waren die erfindungsgemäßen Zellen nach einer Lagerzeit von 3 Monaten bei 45°C hinsichtlich ihres Spannungsverhaltens im Entladetest durchaus mit frischen Zellen vergleichbar, während die herkömmlichen Vergleichszellen wesentlich schlechter abschnitten.

## Patentansprüche

1. Galvanisches Primärelement mit einem zylindrischen Metallbehälter als negative Elektrode, einer konzentrisch um einen Kohlestift als Ableiter angeordneten positiven Depolarisatorelektrode, einer Separation und einem Elektrolyten, wobei in einem Abstand oberhalb der Depolarisatorelektrode eine zentral gelochte Dichtungsscheibe aus einem weichelastischen, porigen Material angeordnet ist, welche den Zwischenraum zwischen dem Kohlestift und dem Metallbehälter überbrückt und durch deren zentrales Loch sich der Kohlestift abgedichtet hindurcherstreckt, dadurch gekennzeichnet, daß die Dichtungsscheibe (3) aus Kunststoff mit ihrem Rand zwischen dem Rand des Metallbechers (2) und dem Rand einer auf die Dichtungsscheibe (3) aufgedrückten Pluskappe (1) durch Einziehen des Metallbecherrandes nach innen eingeklemmt ist und daß auf den Kohlestift (11) im Durchführungsbereich durch die Dichtungsscheibe (3) eine abdichtende Schicht (5) aus einer plastischen, klebrigen Dichtmasse aufgebracht ist.

2. Primärelement nach Anspruch 1, dadurch gekennzeichnet, daß der geschäumte Basiskunststoff der Dichtungsscheibe Polyvinylchlorid ist.

3. Primärelement nach den Ansprüchen 1 bis 2, dadurch gekennzeichnet, daß die Materialstärke der Dichtungsscheibe 0,5 mm bis 3 mm beträgt.

## Revendications

1. Elément galvanique primaire avec un récipient métallique cylindrique jouant le rôle d'électrode négative, avec une électrode positive dépolarisante disposée concentriquement autour d'un crayon de carbone jouant le rôle de conducteur de sortie, avec une séparation et un électrolyte, tandis qu'à une certaine distance au-dessus de l'électrode dépolarisante, est disposée une rondelle d'étanchéité perforée au centre et constituée d'un matériau poreux souple, qui recouvre l'espace intermédiaire entre le crayon de carbone et le récipient métallique, tandis que le crayon de carbone traverse de façon étanche le trou central de cette rondelle d'étanchéité, élément primaire caractérisé en ce que le bord de la rondelle d'étanchéité (3) en matière plastique est pincé entre le bord, rentré vers l'intérieur, du godet métallique (2) et le bord d'un capot positif (1) pressé sur la rondelle d'étanchéité (3), tandis qu'une couche d'étanchement (5) en une masse d'étanchement plastique adhésive est déposée sur le crayon de carbone (11) dans la zone où il traverse la rondelle d'étanchéité (3).

2. Elément primaire selon la revendication 1, caractérisé en ce que la matière de base expansée de la rondelle d'étanchéité est du chlorure de polyvinyle.

3. Elément primaire selon les revendications 1 et 2, caractérisé en ce que l'épaisseur de la rondelle d'étanchéité est de 0,5 mm à 3 mm.

**Claims**

1. Galvanic primary element with a cylindrical metal container as the negative electrode, a positive depolarizer electrode disposed concentrically around a carbon rod as a current collector, a separation and an electrolyte, a centrally perforated sealing washer consisting of a soft, resilient material having pores being located at a distance above the depolarizer electrode, which washer bridges the gap between the carbon rod and the metal container and extending in a sealed manner through its central hole is the carbon rod, characterised in that the sealing washer (3) of synthetic material is clamped by its edge between the edge of the metal cup (2) and the edge of a positive cap (1) pressed onto the sealing washer (3), by drawing the edge of the metal cup inwards and that a sealing layer (5) of a plastic, viscous sealing material is applied to the carbon rod (11) in the region where it is guided through the sealing washer (3).

2. Primary element according to Claim 1, characterised in that the foamed basic synthetic material of the sealing washer is polyvinylchloride.

3. Primary element according to Claims 1 to 2, characterised in that the material thickness of the sealing washer amounts to 0.5 mm to 3 mm.

FIG.1

FIG.2

FIG.3

FIG.4